# FASCICULE DE BREVET EUROPEEN

(11) **EP 2 748 914 B1**
(45) Date de publication et mention de la délivrance du brevet: **15.07.2015**
(21) Numéro de dépôt: 12725379.7
(22) Date de dépôt: 31.05.2012
(51) Int. Cl.: H02K 5/14, H02K 11/02

(54) **CIRCUIT DE MASSE CHARBON**
ERDUNGSSCHALTUNG FÜR KOHLEBÜRSTE
CARBON BRUSH EARTH CIRCUIT

(30) Priorité: 08.06.2011 FR 1154987
(43) Date de publication de la demande: 02.07.2014
(73) Titulaire: Valeo Systèmes d'Essuyage, 78321 Le Mesnil Saint Denis (FR)
(72) Inventeur: BLANCHET, Pierre, F-86140 Clairvaux (FR); DESHOUILLERS, Philippe, F-86300 Chauvigny (FR); SERVIN, Alain, F-86190 Villiers (FR)
(74) Mandataire: Callu Danseux, Violaine
(86) Numéro de dépôt international: PCT/EP2012/060205
(87) Numéro de publication internationale: WO 2012/168128

(56) Documents cités:
- JP-A- 2010 057 298
- US-A1- 2002 030 414
- US-A1- 2004 012 296
- US-A1- 2006 244 321
- US-A1- 2008 315 711
- US-B1- 6 768 243

## Description

L'invention concerne un circuit de prise de masse pour connexion de charbon de moteur à courant continu.

Dans les moteurs à courant continu, notamment les moteurs d'essuie-glaces de véhicules automobiles, l'exécution d'une connexion correcte des charbons et leur découplage à la masse, tension de référence du véhicule, est indispensable, afin , notamment, de réduire le niveau des signaux parasites et d' interférences transitant sur les lignes d'alimentation du véhicule, du fait du contact tournant entre les charbons et les secteurs du collecteur du moteur.

Le simple découplage par un condensateur n'est le plus souvent pas suffisant.

Parmi les solutions retenues dans le domaine technique correspondant, une solution consistant à introduire une borne électriquement conductrice en forme de U, mise en contact mécanique avec le carter métallique du moteur, puis à déformer l'ensemble carter métallique - borne électrique rapportée par une déformation plastique permanente, de type sertissage, pour assurer un contact électrique de masse correct a été proposée par la demande de brevet EP 0 544 404. Le document US 2008/315711 A1 décrit aussi un circuit de prise de masse similaire.

Une telle démarche permet de procurer un contact de masse correct et de ramener une connexion de masse adaptée comme tension de référence des charbons pour les moteurs ainsi obtenus.

Toutefois, un tel mode opératoire s'avère consommateur de temps et d'énergie processus, en particulier lors d'une fabrication en continu sur une chaîne de construction automatisée, du fait de la déformation de type sertissage nécessaire à sa mise en oeuvre.

La présente invention à pour objet de remédier aux inconvénients précités par la mise en oeuvre d'un circuit de prise de masse spécifique pour connexion de charbon de moteur à courant continu, dans lequel le contact électrique de masse, avec la masse du moteur et du véhicule, à laquelle l'inducteur du moteur est également relié, est exécuté par la seule mise en place du carter métallique du moteur.

Un autre objet de la présente invention est également la mise en oeuvre d'un circuit de prise de masse spécifique pour connexion de charbon de moteur à courant continu dans lequel, en l'absence de déformation plastique permanente du carter et de la pièce de connexion, une pluralité de montages/démontages du carter peut-être effectuée sans aucun inconvénient.

Un autre objet de la présente invention est enfin la mise en oeuvre d'une plaquette métallique de connexion de prise de masse spécifique permettant d'assurer un contact électrique correct à la masse du moteur et du véhicule, suite à une pluralité de montages/démontages du carter moteur.

Le circuit de prise de masse pour connexion de charbon de moteur à courant continu, objet de l'invention, est configuré de façon que chaque charbon est connecté par une lame souple et une bobine d'arrêt à un plot de connexion à la borne positive respectivement la borne négative d'alimentation de batterie et placé sur un support symétriquement par rapport à un plan de symétrie d'ensemble.

Il est remarquable en ce qu'il comprend au moins une plaquette métallique présentant, à chacune de ses extrémités, une zone de contact électrique placée en contact électrique avec le carter du moteur, connecté à la masse du moteur, et, un premier et un deuxième condensateur de découplage dont une première branche est électriquement connectée à la plaquette métallique et dont une deuxième branche est électriquement connectée au plot de connexion à la borne positive respectivement au plot de connexion à la borne négative d'alimentation de batterie.

Le circuit de prise de masse, objet de l'invention, est également remarquable en ce que chaque zone de contact électrique placée à l'extrémité de la plaquette métallique comprend au moins une protubérance permettant d'assurer le contact électrique entre chacune des zones de contact électrique et la masse ramenée par l'inducteur, par l'intermédiaire du carter.

Le circuit de prise de masse, objet de l'invention, est également remarquable en ce que la protubérance est constituée par une languette métallique élastique faisant saillie externe vers la surface latérale interne du carter.

Le circuit de prise de masse, objet de l'invention, est en outre remarquable en ce que la plaquette comprend au moins une partie centrale, sensiblement plane et rectiligne, et ,deux zones de contact d'extrémité sensiblement planes, porteuses chacune d'une des protubérances, le plan contenant chaque zone de contact d'extrémité étant incliné d'une valeur d'angle dièdre déterminée opposée, par rapport à la partie centrale sensiblement plane et rectiligne, pour matérialiser une partie de calotte cylindrique et permettre ainsi le contact électrique simultané et permanent de chacune des protubérances avec la surface latérale interne du carter.

Le circuit de prise de masse, objet de l'invention, est également remarquable en ce que la plaquette métallique comporte en outre, à chacune de ses extrémités, des moyens de fixation de la plaquette par enfichage dans un orifice de fixation ménagé dans le support.

Le circuit de prise de masse, objet de l'invention, est également remarquable en ce que les moyens de fixation de la plaquette sont constitués par une première et une deuxième languette venue de matière dans le plan contenant lesdites zones de contact et dont les bords latéraux présentent un profil en dents de scie, la fixation de la plaquette et du circuit de prise de masse sur le support étant exécutée par enfichage à force de chacune des languettes dans un orifice de fixation correspondant.

Le circuit de prise de masse, objet de l'invention, est remarquable en ce que le support étant muni d'un premier et un deuxième orifice de fixation formé par un trou traversant, les moyens de fixation sont constitués par une première une deuxième languette venue de matière dans le plan contenant les zones de contact et dont la longueur est supérieure à la profondeur des trous traversants, la fixation de la plaquette et du circuit sur le support étant exécutée par introduction de chacune des languettes dans l'un des orifices de fixation et repliement/sertissage de chaque languette sous le support.

Le circuit de prise de masse objet de l'invention, est remarquable en ce que la plaquette métallique est constituée en un alliage de cuivre, laiton.

L'invention a également pour objet une plaquette métallique pour circuit de prise de masse pour connexion de charbon de moteur à courant continu, remarquable en ce que cette plaquette présente à chacune de ses extrémités une zone de contact électrique destinée à entrer un contact électrique avec le carter du moteur, connecté par l'inducteur à la masse du moteur.

La plaquette métallique, objet de l'invention, est également remarquable en ce que chaque zone de contact électrique comprend au moins une protubérance permettant d'assurer le contact électrique entre chacune des zones de contact électrique et la masse ramenée par l'inducteur.

La plaquette métallique, objet de l'invention, est enfin remarquable en ce que chaque protubérance est constituée par une languette métallique élastique formant saillie externe vers la surface latérale interne du carter.

Le circuit de prise de masse pour connexion de charbon de moteur à courant continu et la plaquette métallique, objets de l'invention, trouvent application à la fabrication de moteurs à courant continu pour véhicules automobiles, notamment de moteurs d'essuie-glaces.

Ils seront mieux compris à la lecture de la description et à l'observation des dessins ci-après, dans lesquels :
- la figure 1 représente une vue en perspective d'un circuit de prise de masse pour connexion de charbon d'un moteur à courant continu, conforme à l'objet de l'invention, sur son support ;
- la figure 2 représente un schéma équivalent électrique du circuit de prise de masse pour connexion de charbon d'un moteur à courant continu, tel que représenté en figure 1 ;
- la figure 3 représente une vue de dessus du circuit de prise de masse pour connexion de charbon d'un moteur à courant continu, tel que représenté en figure 1 ;
- la figure 4 représente une vue en perspective d'une plaquette métallique dans un mode de réalisation préférentiel non limitatif, spécialement adapté à la mise en oeuvre d'un circuit de prise de masse pour connexion de charbon d'un moteur à courant continu, tel que représenté aux figures 1 à 3.

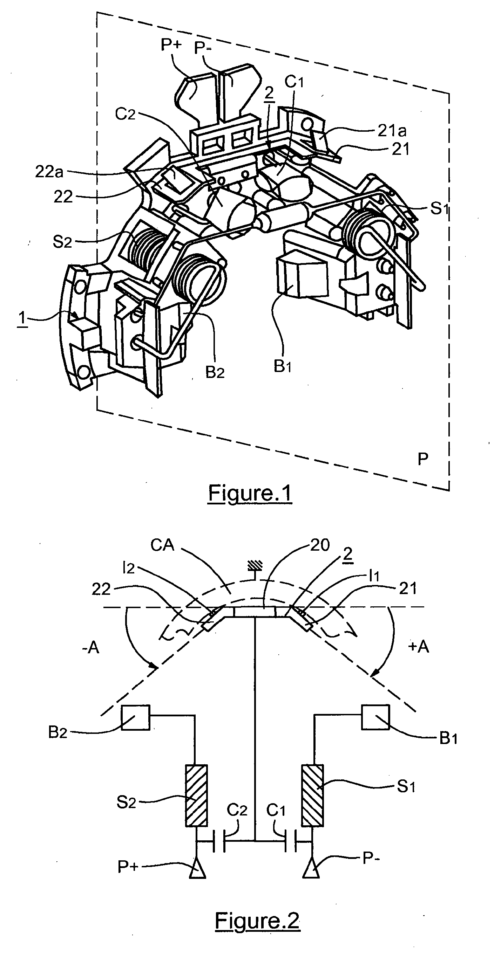

Une description plus détaillée du circuit de prise de masse pour connexion de charbon de moteur à courant continu, conforme à l'objet de la présente invention, sera maintenant donnée en liaison avec la figure 1 et les figures suivantes.

En référence à la figure 1, on indique que le circuit de prise de masse pour connexion de charbon de moteur à courant continu, objet de l'invention, s'applique à une configuration dans laquelle chaque charbon, ou balai, B1, B2 est connecté par une lame souple et une self S1, S2 à un plot de connexion P+, P- à la borne positive respectivement à la borne négative d'alimentation par la batterie du véhicule.

En outre, ainsi que représenté sur la même figure1, chaque charbon B1 et B2 est agencé sur un support 1 symétriquement par rapport à un plan de symétrie d'ensemble, noté P sur la figure 1 précitée.

On comprend, en particulier, que le support 1 et l'agencement des charbons sont symétriques par rapport au plan P de symétrie longitudinale de l'ensemble, ce plan, lorsque le support 1 équipé des charbons est mis en place sur le collecteur du moteur, contenant l'axe de rotation de l'arbre de rotation du moteur et du collecteur.

Ainsi qu'on l'observera sur la figure 1, le circuit de prise de masse, objet de l'invention, comprend au moins, de manière remarquable, une plaquette métallique 2 présentant à chacune de ses extrémités une zone de contact électrique 21 respectivement 22. Chaque zone de contact électrique est destinée à être placée en contact électrique avec l'inducteur du moteur, connecté à la masse du moteur, par l'intermédiaire du carter métallique du moteur.

En outre, ainsi qu'on l'observera sur la figure 1, le circuit de prise de masse objet de l'invention comprend un premier C1 et un deuxième C2 condensateur de découplage dont une première branche est électriquement connectée à la plaquette métallique 2 et dont une deuxième branche est électriquement connectée au plot de connexion P+ à la borne positive respectivement au plot de connexion P- à la borne négative d'alimentation par la batterie.

Un schéma équivalent électrique du circuit de prise de masse pour connexion de charbon de moteur à courant continu, tel que représenté en figure 1, est maintenant décrit en liaison avec la figure 2.

Sur la figure 2 précitée, on constate que les condensateurs de découplage C1 et C2 ont une branche commune reliée directement à la plaquette métallique 2, leur autre branche respective étant connectée directement à la self S1 qui est connectée au charbon B1 et au plot de connexion P- respectivement à la self S2 qui est connectée au charbon B2 et au plot de connexion P+.

À l'observation de la figure 1 et de la figure 2, on comprend que chaque zone de contact électrique 21 et 22 placée à l'extrémité de la plaquette métallique 2 comprend au moins une protubérance, notée 21 a et 22a, permettant d'assurer le contact électrique entre chacune des zones de contact électrique et la masse ramenée par l'inducteur, par l'intermédiaire du carter CA, représenté en pointillé selon une forme sensiblement cylindrique sur la figure 2.

Ainsi qu'on l'observera en outre sur la figure 1 et sur la figure 2, chaque protubérance peut-être constituée par une languette métallique élastique, venue de matière de chacune des zones de contact électrique 21 et 22 respectivement. Chaque languette notée I1 et I2 est en saillie externe vers la surface latérale interne du carter CA, placé au potentiel de masse de l'inducteur.

De manière plus spécifique, on indique que la languette métallique 2 peut avantageusement être constituée en un matériau métallique spécialement adapté pour la constitution de contacts souples par exemple. Ce matériau peut comprendre, à titre d'exemple non limitatif, différents alliages tels que alliage cuivre-béryllium, laiton ou autre. On comprend ainsi que la languette métallique 2 peut être façonnée par découpage et emboutissage des zones de contact 21 et 22, et, en particulier des languettes I1 et I2 constituant les protubérances 21 a et 22a précitées. Le processus d'emboutissage permet de conformer la plaquette métallique 2, ainsi que représentée sur la figure 2, de façon que les zones de contact 21 et 22 et en particulier les protubérances ou languettes I1 et I2 soient mises directement en contact avec la face interne du carter métallique CA , du fait de la simple mise en place de ce dernier sur le support 1, ainsi qu'il sera décrit ci-après. En variante, les bossages 21a et 22a peuvent être formés sans découpe. Dans ce but, les zones de contact d'extrémité 21 et 22 peuvent être conformées par pliage de leur extrémité libre, de façon à former la protubérance élastique faisant saillie vers la face interne du carter CA. L'extrémité pliée en forme de U des zones de contact d'extrémité 21 et 22 permet la mise en oeuvre de la même fonction que celle exécutée par les languettes découpées I1 et 12.

Ainsi qu'on l'a représenté en particulier en figure 2, la plaquette métallique 2 comprend au moins une partie centrale 20 sensiblement plane et rectiligne et les de zone de contact d'extrémité sensiblement planes 21 et 22 porteuses chacune d'une des protubérances 21 a, 22a. En outre, ainsi qu'on l'observera notamment sur la même figure 2, chaque zone de contact d'extrémité 21 et 22 est inclinée d'une valeur d'angle dièdre déterminée opposée, notées+A et -A, par rapport à la partie centrale 20 sensiblement plane et rectiligne. Cette mise en forme de la plaquette métallique 2 permet de matérialiser la partie de calotte cylindrique du carter CA et d'exécuter le contact électrique simultané et permanent de chacune des protubérances, c'est-à-dire des languettes I1 et I2, avec la surface latérale interne du carter CA au potentiel de masse de l'inducteur.

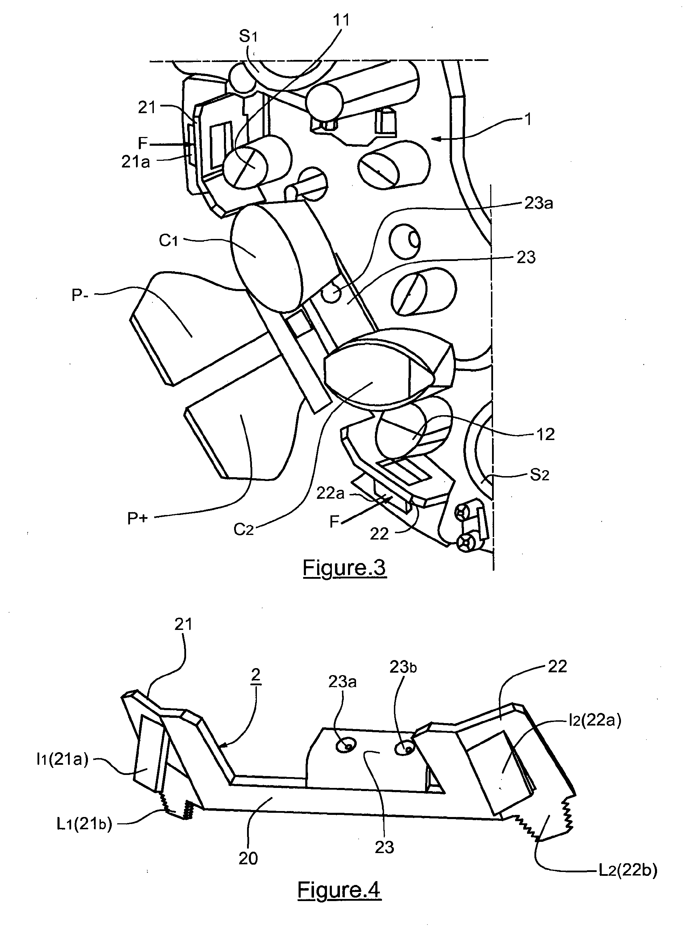

Sur la figure 3, on a représenté une vue de dessus de la figure 1 et un détail de mise en oeuvre de la languette métallique 2, en particulier de l'implantation de celle-ci sur le support 1. De préférence, la languette métallique 2 est munie à chacune de ses extrémités de moyens de fixation 21 b, 22b par enfichage dans un orifice de fixation ménagé dans le support 1.

En outre, lors de l'installation du carter CA sur le support 1 équipé de la languette métallique 2, il se produit, ainsi que représenté sur la figure 3, une force de compression F, du fait du contact du carter CA sur les protubérances constituées par les languettes I1 et I2. La force de compression précitée a pour effet d'exercer un effort de torsion sur la languette métallique 2 susceptible d'exercer une contrainte sur la fixation de la languette métallique 2 sur le support 1. Dans le but d'éviter non seulement toute déformation de la languette métallique 2 mais également toute détérioration du contact électrique entre chaque languette I1 e tI2 constitutives des protubérances des zones de contact électrique 21 et 22 sur le carter CA, le support 1 est avantageusement muni de butées d'arrêt 11 et 12. Ces butées d'arrêt peuvent avantageusement être venues de matière, lors de la fabrication du support 1. À titre d'exemple non limitatif on indique que le support 1 peut-être constitué par un matériau plastique tel que le Delrin chargé par de la fibre de verre et obtenu par moulage et/ou injection.

Les butées d'arrêt 11 et 12 peuvent par exemple avoir une hauteur sensiblement égale à la hauteur des zones de contact d'extrémité 21 et 22 de la plaquette métallique 2, pour assurer ainsi l'absence de déformation importante des zones de contact d'extrémité précitées et de la plaquette métallique 2.

Une description plus détaillée de la languette métallique 2 proprement dite est maintenant donnée en liaison avec la figure 4.

La figure 4 représente une vue en perspective de la languette métallique 2. À l'observation de la figure précitée, on constate que la plaquette métallique 2, objet de l'invention, comprend de manière remarquable, à chacune de ses extrémités, la zone de contact électrique 21, 22 destinée à entrer en contact électrique avec le carter CA porté au potentiel de masse de l'inducteur du moteur.

Chacune des zones de contact électrique 21,22 est munie d'au moins une protubérance 21 a et 22a permettant d'assurer le contact électrique entre chacune des zones de contact électrique et la masse ramenée par l'inducteur par l'intermédiaire du carter.

Dans le mode de réalisation préférentiel tel que représenté en figure 4, chaque protubérance 21 a et 22a est constituée par une languette métallique élastique I1,I2 ainsi que décrit précédemment. Sur la figure 4 précitée, on observe également que les moyens de fixation de la plaquette métallique 2 sont avantageusement constitués par une première L1, 21 b, et une deuxième L2, 22b, languette venue de matière dans le plan contenant les zones de contact d'extrémité 21 et 22.

Dans un premier mode de réalisation avantageux non limitatif, on indique que les bords latéraux de chacune des premières et deuxième languette L1,L2 présentent un profil en dents de scie. Ainsi, les languettes L1 et L2 présentent avantageusement une forme trapézoïdale et les bords de cette dernière sont échancrés. Dans ces conditions, la fixation de la plaquette métallique 2 et du circuit de prise de masse, objets de l'invention, sur le support 1 est exécutée par enfichage à force de chacune des languettes L1 et L2 dans un orifice de fixation correspondant.

Dans un deuxième mode de réalisation avantageux non limitatif, on indique en outre que lorsque le support est muni d'un premier et un deuxième orifice de fixation de la plaquette métallique 2 formé par un trou traversant, les moyens de fixation sont avantageusement constitués par une première et une deuxième languette L1 et L2 venues de matière dans le plan contenant les zones de contact 21,22 mais dont la longueur est supérieure à la profondeur des trous traversants précités. Dans ces conditions, la fixation de la plaquette métallique 2 et du circuit de prise de masse, objets de l'invention, sur le support 1 est exécutée par introduction de chacune des languettes dans l'un des orifices de fixation et repliement/sertissage de chaque languette sous le support 1.

Enfin, ainsi que le montre la figure 4 précitée, la partie rectiligne 20 comporte une zone plane 23 venue de matière, conformée par emboutissage, et munie d'orifices de connexion 23a et 23b. La zone plane 23 forme ainsi une zone de connexion des branches des condensateurs C1 et C2, dont la branche, reliée à la plaquette métallique 2, est enfichée dans un des orifices 23a, 23b et connectée par soudure.

## Revendications

1. Circuit de prise de masse pour connexion de charbon de moteur à courant continu, chaque charbon (B1, B2) étant connecté par une lame souple et une bobine d'arrêt à un plot de connexion à la borne positive respectivement la borne négative d'alimentation de batterie et placé sur un support symétriquement par rapport à un plan de symétrie d'ensemble, **caractérisé en ce que** ledit circuit de prise de masse comprend au moins :
- une plaquette métallique (2) présentant à chacune de ses extrémités une zone de contact électrique (21, 22) placée en contact électrique avec le carter du moteur, connecté à la masse du moteur ;
- un premier (C1) et un deuxième (C2) condensateur de découplage dont une première branche est électriquement connectée à la plaquette métallique et dont une deuxième branche est électriquement connectée au plot de connexion (P+) à la borne positive respectivement au plot de connexion à la borne négative (P-) d'alimentation de batterie.

2. Circuit de prise de masse selon la revendication 1, **caractérisé en ce que** chaque zone de contact électrique (21, 22) placée à l'extrémité de la plaquette métallique (2) comprend au moins une protubérance (21a, 22a) permettant d'assurer le contact électrique entre chacune des zones de contact électrique (21, 22) et la masse ramenée par l'inducteur, par l'intermédiaire du carter (CA).

3. Circuit de prise de masse selon la revendication 2, **caractérisé en ce que** ladite protubérance (21a, 22a) est constituée par une languette métallique (2) élastique faisant saillie externe vers la surface latérale interne du carter.

4. Circuit de prise de masse selon l'une des revendications 1 à 3, **caractérisé en ce que** ladite plaquette métallique (2) est conformée par découpage et/ou emboutissage.

5. Circuit de prise de masse selon l'une des revendications 2 à 4, **caractérisé en ce que** ladite plaquette (2) comprend au moins :
- une partie centrale, sensiblement plane et rectiligne;
- deux zones de contact (21, 22) d'extrémité ensiblement planes porteuse chacune d'une des dites protubérances, le plan contenant chaque zone de contact d'extrémité étant incliné d'une valeur d'angle dièdre déterminée opposée, par rapport à la partie centrale sensiblement plane et rectiligne, pour matérialiser une partie de calotte cylindrique et permettre ainsi le contact électrique simultané et permanent de chacune des protubérances avec la surface latérale interne du carter (CA).

6. Circuit de prise de masse selon l'une des revendications 1 à 5, **caractérisé en ce que** ladite plaquette métallique (2) comporte en outre, à chacune de ses extrémités, des moyens de fixation de la plaquette par enfichage dans un orifice de fixation ménagée dans ledit support.

7. Circuit de prise de masse selon la revendication 6, **caractérisé en ce que** les moyens de fixation de la plaquette sont constitués par une première (l1, 21b) et une deuxième (l2, 22b) languette venue de matière dans le plan contenant lesdites zones de contact (21, 22) et dont les bords latéraux présentent un profil en dents de scie, la fixation de ladite plaquette et du circuit de prise de masse sur le support étant exécutée par enfichage à force de chacune des dites languettes (l1, l2, 21b, 22b) dans un orifice de fixation correspondant.

8. Circuit de prise de masse selon la revendication 6, **caractérisé en ce que** ledit support étant muni d'un premier et un deuxième orifice de fixation formé par un trou traversant, lesdits moyens de fixation sont constitués par une première (l1, 21b) une deuxième (l2, 22b) languette venue de matière dans le plan contenant lesdites zones de contact et dont la longueur est supérieure à la profondeur des trous traversants, la fixation de ladite plaquette et du circuit sur le support (1) étant exécutée par introduction de chacune des languettes (l1, l2, 21b, 22b) dans l'un des orifices de fixation et repliement/sertissage de chaque languette sous le support.

9. Circuit de prise de masse selon l'une des revendications 1 à 8, **caractérisé en ce que** ladite plaquette métallique (2) est constituée en un alliage de cuivre, laiton.

10. Plaquette métallique (2) pour circuit de prise de masse pour connexion de charbon (B1, B2) de moteur a courant continu ledit circuit de prise de masse comprenant un premier et un deuxième condensateur de découplage dont une première branche est électriquement connectée à la plaquette métalique, ladite plaquette comporte une partie rectiligne et présente à chacune de ses extrémités une zone de contact électrique destinée à entrer en contact électrique avec le carter (CA) du moteur, connecté à la masse du moteur par l'intermédiaire de l'inducteur **caractérisée en ce que** la partie rectiligne comporte une zone plane venue de matière conformée par emboutissage, et munie d'orifices de connexion, la zone plane formant une zone de connexion des branches des condensateurs dont la branche, reliée à la plaquette métallique, est enfichée dans un des orifices et connectée par soudure.

11. Plaquette métallique (2) selon la revendication 10, **caractérisée en ce que** chaque zone de contact électrique comprend au moins une protubérance (21a, 22a) permettant d'assurer le contact électrique entre chacune des zones de contact électrique et la masse ramenée par l'inducteur.

12. Plaquette métallique (2) selon la revendication 11, **caractérisée en ce que** ladite au moins une protubérance est constituée par une languette métallique (l1, 21b, l2, 22b) élastique formant saillie externe vers la surface latérale interne du carter (CA).

## Patentansprüche

1. Erdungsschaltung für den Anschluss einer Kohlebürste eines Gleichstrommotors, wobei jede Kohlebürste (B1, B2) durch eine flexible Lamelle und eine Drosselspule an eine Anschlussbuchse an die positive Klemme bzw. die negative Klemme zur Versorgung einer Batterie angeschlossen und auf einem Träger symmetrisch zu einer Gesamtsymmetrieebene angeordnet ist, **dadurch gekennzeichnet, dass** die Erdungsschaltung mindestens umfasst:
- eine metallische Platte (2), die an jedem ihrer Enden eine elektrische Kontaktzone (21, 22) aufweist, die in elektrischem Kontakt mit dem Gehäuse des Motors angeordnet ist, das an die Masse des Motors angeschlossen ist;
- einen ersten (C1) und einen zweiten (C2) Entkopplungskondensator, der mit einem ersten Abschnitt elektrisch an die metallische Platte angeschlossen ist, und mit einem zweiten Abschnitt elektrisch an die Anschlussbuchse (P+) an die positive Klemme bzw. an die Anschlussbuchse (P-) an die negative Klemme zur Batterieversorgung angeschlossen ist.

2. Erdungsschaltung nach Anspruch 1, **dadurch gekennzeichnet, dass** jede elektrische Kontaktzone (21, 22), die am Ende der metallischen Platte (2) angeordnet ist, mindestens eine Ausstülpung (21a, 22a) umfasst, die es ermöglicht, den elektrischen Kontakt zwischen jeder der elektrischen Kontaktzonen (21, 22) und der vom Induktor zurückgeführten Masse mit Hilfe des Gehäuses (CA) zu gewährleisten.

3. Erdungsschaltung nach Anspruch 2, **dadurch gekennzeichnet, dass** die Ausstülpung (21a, 22a) von einer elastischen metallischen Zunge (2) gebildet ist, die außen zur inneren Seitenfläche des Gehäuses vorspringt.

4. Erdungsschaltung nach einem der Ansprüche 1 bis 3, **dadurch gekennzeichnet, dass** die metallische Platte (2) durch Ausschneiden und/oder Tiefziehen geformt wird.

5. Erdungsschaltung nach einem der Ansprüche 2 bis 4, **dadurch gekennzeichnet, dass** die Platte (2) mindestens umfasst:
- einen im Wesentlichen flachen und geradlinigen zentralen Teil;
- zwei im Wesentlichen flache Endkontaktzonen (21, 22), die jeweils eine der Ausstülpungen tragen, wobei die Ebene, die jede Endkontaktzone enthält, um einen bestimmten entgegengesetzten Diederwinkelwert in Bezug zu dem im Wesentlichen flachen und geradlinigen zentralen Teil geneigt ist, um einen zylindrischen Abdeckungsteil darzustellen und so den gleichzeitigen und permanenten elektrischen Kontakt jeder der Ausstülpungen mit der inneren Seitenfläche des Gehäuses (CA) zu ermöglichen.

6. Erdungsschaltung nach einem der Ansprüche 1 bis 5, **dadurch gekennzeichnet, dass** die metallische Platte (2) ferner an jedem ihrer Enden Mittel zur Befestigung der Platte durch Einstecken in eine in dem Träger vorgesehene Befestigungsöffnung umfasst.

7. Erdungsschaltung nach Anspruch 6, **dadurch gekennzeichnet, dass** die Befestigungsmittel der Platte von einer ersten (11, 21b) und einer zweiten (12, 22b) Zunge gebildet sind, die mit der die Kontaktzonen (21, 22) enthaltenden Ebene aus einem Stück sind, deren Seitenränder ein Sägezahnprofil aufweisen, wobei die Befestigung der Platte und der Erdungsschaltung auf dem Träger durch festes Einstecken jeder der Zungen (11, 12, 21b, 22b) in eine entsprechende Befestigungsöffnung erfolgt.

8. Erdungsschaltung nach Anspruch 6, **dadurch gekennzeichnet, dass** der Träger mit einer ersten und einer zweiten Befestigungsöffnung, die von einem Durchgangsloch gebildet ist, versehen ist, die Befestigungsmittel von einer ersten (11, 21b) und einer zweiten (12, 22b) Zunge gebildet sind, die mit der die Kontaktzonen enthaltenden Ebene aus einem Stück sind und deren Länge größer als die Tiefe der Durchgangslöcher ist, wobei die Befestigung der Platte und der Schaltung auf dem Träger (1) durch Einführung jeder der Zungen (11, 12, 21b, 22b) in eine der Befestigungsöffnungen und Falzen/Bördeln jeder Zunge unter dem Träger erfolgt.

9. Erdungsschaltung nach einem der Ansprüche 1 bis 8, **dadurch gekennzeichnet, dass** die metallische Platte (2) aus einer Kupfer-Messing-Legierung besteht.

10. Metallische Platte (2) für eine Erdungsschaltung für den Anschluss einer Kohlebürste (B1, B2) eines Gleichstrommotors, wobei die Erdungsschaltung einen ersten und einen zweiten Entkopplungskondensator umfasst, der mit einem ersten Abschnitt elektrisch an die metallische Platte angeschlossen ist, wobei die Platte einen geradlinigen Teil umfasst und an jedem ihrer Enden eine elektrische Kontaktzone aufweist, die dazu bestimmt ist, mit dem Gehäuse (CA) des Motors in elektrischen Kontakt zu kommen, das an die Masse des Motors mit Hilfe des Induktors angeschlossen ist, **dadurch gekennzeichnet, dass** der geradlinige Teil eine flache Zone aus einem Stück umfasst, die durch Tiefziehen ausgebildet und mit Anschlussöffnungen versehen ist, wobei die flache Zone eine Anschlusszone der Abschnitte der Kondensatoren bildet, deren Abschnitt, der mit der metallischen Platte verbunden ist, in eine der Öffnungen eingesteckt und durch Schweißen angeschlossen ist.

11. Metallische Platte (2) nach Anspruch 10, **dadurch gekennzeichnet, dass** jede elektrische Kontaktzone mindestens eine Ausstülpung (21a, 22a) umfasst, die es ermöglicht, den elektrischen Kontakt zwischen jeder der elektrischen Kontaktzonen und der vom Induktor zurückgeführten Masse zu gewährleisten.

12. Metallische Platte (2) nach Anspruch 11, **dadurch gekennzeichnet, dass** die mindestens eine Ausstülpung von einer elastischen metallischen Zunge (11, 21b, 12, 22b) gebildet ist, die einen äußeren Vorsprung zu der inneren Seitenfläche des Gehäuses (CA) bildet.

## Claims

1. Ground connection circuit for connecting the carbon brush of a direct-current motor, each carbon brush (B1, B2) being connected by a flexible blade and a choke to a connection contact at the positive or negative terminal respectively of a battery supply and placed on a supporting element symmetrically in relation to a plane of symmetry of the whole, **characterized in that** said ground connection circuit includes at least:
- one metal plate (2) having, at each of the ends thereof, an electrical contact zone (21, 22) placed in electrical contact with the case of the motor, which is connected to motor ground;
- a first decoupling condenser (C1) and a second decoupling condenser (C2), a first branch of which is connected electrically to the metal plate and a second branch of which is connected electrically to the connection contact (P+) at the positive terminal or respectively to the connection contact (P-) at the negative terminal of the battery supply.

2. Ground connection circuit according to Claim 1, **characterized in that** each electrical contact zone (21, 22) at the end of the metal plate (2) includes at least one protuberance (21a, 22a) guaranteeing the electrical contact between each of the electrical contact zones (21, 22) and ground connected by the field system via the case (CA).

3. Ground connection circuit according to Claim 2, **characterized in that** said protuberance (21a, 22a) is formed by an elastic metal tab (2) projecting outwards towards the internal lateral surface of the case.

4. Ground connection circuit according to one of Claims 1 to 3, **characterized in that** said metal plate (2) is formed by cutting and/or stamping.

5. Ground connection circuit according to one of Claims 2 to 4, **characterized in that** said plate (2) includes at least:
- one central part that is substantially flat and straight;
- two substantially flat end contact zones (21, 22), each including one of said protuberances, the plane containing each end contact zone being inclined by a given opposing dihedral angle in relation to the substantially flat and straight central part to form a cylindrical cover and thereby enable the simultaneous and permanent electrical contact between each of the protuberances and the internal lateral surface of the case (CA).

6. Ground connection circuit according to one of Claims 1 to 5, **characterized in that** said metal plate (2) also includes, at each of the ends thereof, means for attaching the plate by plugging into an attachment orifice formed in said supporting element.

7. Ground connection circuit according to Claim 6, **characterized in that** the attachment means of the plate are formed by a first tab (11, 21b) and a second tab (12, 22b) formed integrally in the plane containing said contact zones (21, 22), the lateral edges of which have a sawtooth profile, the plate and the ground connection circuit being attached to the supporting element by forcing each of the tabs (11, 12, 21b, 22b) into a corresponding attachment orifice.

8. Ground connection circuit according to Claim 6, **characterized in that**, as said supporting element has a first attachment orifice and a second attachment orifice formed by a through-hole, said attachment means are formed by a first tab (11, 21b) and a second tab (12, 22b) formed integrally in the plane containing said contact zones, the length thereof being greater than the depth of the through-holes, said plate and the circuit being attached to the supporting element (1) by inserting each of the tabs (11, 12, 21b, 22b) into one of the attachment orifices and bending/crimping each tab under the supporting element.

9. Ground connection circuit according to one of Claims 1 to 8, **characterized in that** said metal plate (2) is made of a copper alloy, brass.

10. Metal plate (2) for a ground connection circuit for connecting the carbon brush (B1, B2) of a direct-current motor, said ground connection circuit comprising a first and a second decoupling condenser, a first branch of which is electrically connected to the metal plate, said plate including a straight part and has, at each of the ends thereof, an electrical contact zone intended to come into electrical contact with the case (CA) of the motor, which is connected to motor ground by means of the field system, **characterized in that** the straight part comprises a flat zone made of material shaped by stamping, and provided with connection orifices, the flat zone forming a zone of connection of the branches of the condensers of which the branch, linked to the metal plate, is plugged into one of the orifices and connected by welding.

11. Metal plate (2) according to Claim 10, **characterized in that** each electrical contact zone includes at least one protuberance (21a, 22a) guaranteeing the electrical contact between each of the electrical contact zones and ground connected by the field system.

12. Metal plate (2) according to Claim 11, **characterized in that** said at least one protuberance is formed by an elastic metal tab (11, 21b, 12, 22b) projecting outwards towards the internal lateral surface of the case (CA).
